# EUROPEAN PATENT APPLICATION

(11) **EP 4 006 385 A1**
(43) Date of publication of application: **01.06.2022**
(21) Application number: 19943958.9
(22) Date of filing: 25.09.2019
(51) Int. Cl.: F16H 57/029, F16H 48/38

(54) **ELECTRIC DRIVE ASSEMBLY OF DRY DIFFERENTIAL AND NEW ENERGY AUTOMOBILE**

(30) Priority: 03.09.2019 CN 201910827663
(71) Applicant: Jing-Jin Electric Technologies Co., Ltd., Beijing 100016 (CN)
(72) Inventor: LI, Jianwen, Beijing 100016 (CN); YU, Ping, Beijing 100016 (CN); LIU, Guoshan, Beijing 100016 (CN)
(74) Representative: Petraz, Gilberto Luigi
(86) International application number: PCT/CN2019/107800
(87) International publication number: WO 2021/042426

(57) **Abstract**

An electric drive assembly of dry differential and a new energy vehicle are disclosed. The electric drive assembly of dry differential comprises a reducer and a differential. The reducer comprises a reducer housing (10) and a reducer end cover. The differential is rotatably provided in the reducer housing (10) and comprises a differential cover (4) and a differential housing (9), the differential cover (4) and the differential housing (9) are fixedly connected, an end of the differential cover (4) opposite from the differential housing (9) is provided with a bearing mounting seat, an inside of a chamber formed is provided with a pair of side gears (5), a pair of pinion gears (6) and a pinion shaft (7), both ends of the pinion shaft (7) are fixed on the differential housing (9), the pinion gears (6) are sleeved on both ends of the pinion shaft (7), the side gears (5) are meshed with the pinion gears (6), an inner hole of the side gear (5) is equipped with an side gear end cap (8). The side gear end cap (8) in the electric drive assembly belongs to static seal, and has a simple structure and high sealing reliability. The differential oil seal (2) is sealed with the outer circumference of the side gear (5), which, compared with the traditional structure in which the outer circumference of the half shaft is sealed, reduces the eccentricity and axial movement, and reduces the wear of the oil seal.

## Description

### TECHNICAL FIELD

The present disclosure relates to the technical field of main reducer assembly, in particular to an electric drive assembly of dry differential and a new energy vehicle.

### BACKGROUND

When the new energy vehicle runs, the wheels on both sides often rotate at different speeds so as to adapt to the steering and working conditions of different roads. A differential device needs to be provided between the wheels on both sides to ensure the power transmission of the driving wheels under various motion conditions, avoid skidding and wear between the tires and the ground and improve the ride comfort of the vehicle.

At present, the sealing between the differential and the outer circumference of the half shaft are realized mostly by the differential oil seal. The differential spline is partly submerged in the oil and is not sealed. The positioning of the half shaft after assembled is inaccurate and the eccentricity is large, which results in increased wear of the oil seal, early failure and oil leakage, and cannot meet the service life and reliability requirements of the whole vehicle.

### SUMMARY

In view of the above problems, the present invention is proposed to provide an electric drive assembly of dry differential and a new energy vehicle that solve or at least partially solve the above technical problems.

In order to achieve the above object, the present disclosure adopts the following technical solutions.

An aspect of the present disclosure provides an electric drive assembly of dry differential comprising a reducer and a differential, wherein
the reducer comprises a reducer housing and a reducer end cover;
the differential is rotatably provided in the reducer housing and comprises a differential cover and a differential housing, the differential cover and the differential housing are fixedly connected, an end of the differential cover opposite from the differential housing are provided with a bearing mounting seat, an inside of a chamber of the differential formed is provided with a pair of side gears, a pair of pinion gears and a pinion shaft, both ends of the pinion shaft are fixed on the differential housing, the pinion gears are sleeved on both ends of the pinion shaft, the side gears are meshed with the pinion gears, the side gear is provided with an inner hole for assembling the half shaft, and the side gear inner hole is equipped with an side gear end cap.

Optionally, the reducer housing or the reducer end cover outside the bearing mounting seat is equipped with a differential oil seal, and a lip of the differential oil seal cooperates with an outer circumference of the side gear.

Optionally, an outer side of the side gear end cap is connected with the half shaft through a spline.

Another aspect of the present disclosure provides a new energy vehicle comprising an electric drive assembly as stated above.

The electric drive assembly of dry differential of the present disclosure has the following advantages:
In the electric drive assembly of dry differential of the present disclosure, the side gear end cap is installed in the inner hole of the side gear, which belongs to static seal, and has a simple structure and high sealing reliability.

In the electric drive assembly of dry differential of the present disclosure, the differential oil seal is sealed with the outer circumference of the side gear, which, compared with the traditional structure in which the outer circumference of the half shaft is sealed, reduces the eccentricity and axial movement, and reduces the wear of the oil seal.

The above is only an overview of the technical solutions of the present disclosure. In order to better understand the technical means of the present disclosure so that it can be implemented according to the contents of the description, and in order to make the above and other objects, features and advantages of the present disclosure more obvious and easy to understand, the specific embodiments of the present disclosure are given below.

### BRIEF DESCRIPTION OF DRAWINGS

By reading the detailed description of the preferred embodiments below, various other advantages and benefits will become clear to a person of ordinary skill in the field. The drawings are only used for the purpose of illustrating the preferred embodiments, and should not be considered as a limitation to the present disclosure. Moreover, throughout the drawings, same reference numerals denote same components. In the drawings:
FIG. 1 is a schematic diagram of an electric drive assembly of dry differential according to an embodiment of the present disclosure; and
FIG. 2 is a partially enlarged view of part I in FIG. 1.

In the drawings: 1. reducer cover; 2. differential oil seal; 3. bearing; 4. differential cover; 5. side gear; 6. pinion gear; 7. pinion shaft; 8. side gear end cap; 9. differential housing; 10. reducer housing.

### DETAILED DESCRIPTION

Illustrative embodiments of the present disclosure will be described in more detail with reference to the drawings. Although the drawings show the illustrative embodiments of the present disclosure, it should be understood that the present disclosure can be implemented in various ways and should not be limited by the embodiments disclosed herein. On the contrary, the embodiments are provided for a more thorough and complete understanding of the present disclosure, so as to fully convey the scope of the present disclosure to those skilled in the field.

The "and/or" herein means that both the situation that each item exists separately and the situation that the items coexist are included.

The "inside" and "outside" herein are defined relative to the equipment itself. The direction pointing to the inside of the equipment is "inside", and the direction pointing to the outside of the equipment is "outside".

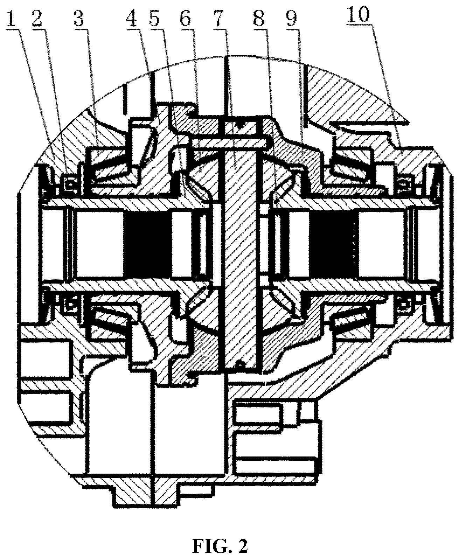

The "front end" and "rear end" herein are defined when the device is in the position shown in FIG. 2, the right end is the "front end" and the left end is the "rear end".

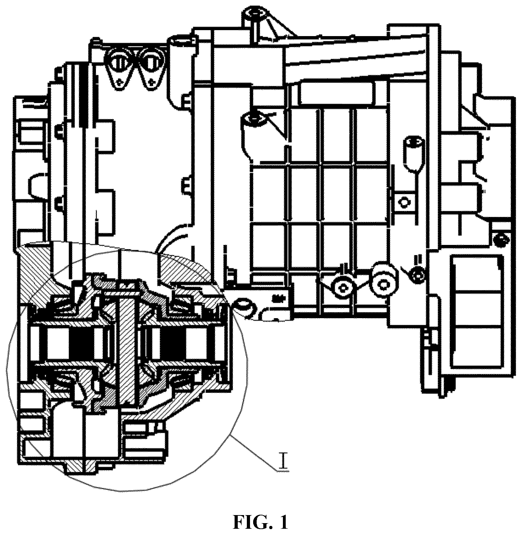

Referring to FIGs. 1-2, the transmission in the present disclosure comprises an side gear 5, a pinion gear 6, a pinion shaft 7, a differential cover 4, a differential housing 9, a reducer cover 1, a reducer housing 10, a bearing 3, an side gear end cap 8, a differential oil seal 2, and other parts. The differential cover 4 is fixedly connected with the differential housing 9, an end of the differential cover 4 opposite from the differential housing 9 is provided with a bearing mounting seat, and the inside of the chamber formed by them is provided with a pair of side gears 5, a pair of pinion gears 6 and a pinion shaft 7. Both ends of the pinion shaft 7 are fixed on the differential housing 9. The pinion gears 6 are sleeved on both ends of the pinion shaft 7. The side gears 5 are meshed with the pinion gears 6.

The inventiveness of the present invention lies in that an side gear end cap 8 and a differential oil seal 2 are further provided, wherein the side gear end cap 8 is assembled in the inner hole of the side gear 5 to seal the inner cavity of the differential and isolate the lubricating oil from the half shaft. Moreover, the reducer housing 1 is equipped with a differential oil seal 2. A lip of the oil seal cooperates with the outer circumference of the side gear 5 to play a sealing role. The differential housing and the reducer housing are connected through the bearing 3 to form a dry differential.

In addition, in an embodiment, the half shaft is assembled in the inner hole of the side gear through a spline. Of course, the connection way may not be specifically limited.

It can be seen that in the electric drive assembly disclosed in the present disclosure, the static sealing of the side gear end cap results in a simple sealing structure and high reliability; the differential oil seal is sealed with the outer circumference of the side gear, which, compared with the traditional structure in which the outer circumference of the half shaft is sealed, reduces the eccentricity and axial movement, and reduces the wear of the oil seal.

It should be noted that the electric drive assembly having the above differential in the present disclosure works as follows. When the vehicle runs in a straight line, the motor drives the driving gear in the reducer to rotate, the driving gear drives the driven gear to rotate, and the driven gear drives the differential assembly to revolve in the main reducer housing through the rotation of the differential housing. The pinion gears 6 mesh with the side gears 5 on both sides and revolve in the reducer housing together with the differential assembly, and the two half shafts transmit force and torque to the wheels through universal joints and other mechanisms to drive the wheels to rotate.

When the vehicle turns, the pinion gears 6 rotate. The pinion gears 6 transmit the revolution speed and the rotation speed itself to the outer wheel through the side gears 5, the half shaft and the universal joint, so that the rotation speed of the outer wheel is greater than that of the inner wheel, thereby realizing the smooth turning of the vehicle.

The above are only the specific embodiments of the present disclosure, but the protection scope of the present disclosure is not limited to this. Any person skilled in the field can easily think of changes or substitutions within the technical scope disclosed by the present disclosure, which should be covered by the protection scope of the present disclosure. Therefore, the protection scope of the present disclosure shall be subject to the protection scope of the claims.

## Claims

1. An electric drive assembly of dry differential, comprising a reducer and a differential, wherein
the reducer comprises a reducer housing (10) and a reducer end cover;
the differential is rotatably provided in the reducer housing (10) and comprises a differential cover (4) and a differential housing (9), the differential cover (4) and the differential housing (9) are fixedly connected, an end of the differential cover (4) opposite from the differential housing (9) is provided with a bearing mounting seat, an inside of a chamber of the differential formed is provided with a pair of side gears (5), a pair of pinion gears (6) and a pinion shaft (7), both ends of the pinion shaft (7) are fixed on the differential housing (9), the pinion gears (6) are sleeved on both ends of the pinion shaft (7), the side gears (5) are meshed with the pinion gears (6), the side gear (5) is provided with an inner hole for assembling the half shaft, and the side gear inner hole is equipped with an side gear end cap (8).

2. The electric drive assembly according to claim 1, **characterized in that**: the reducer housing (10) or the reducer end cover outside the bearing mounting seat is equipped with a differential oil seal (2), and a lip of the differential oil seal (2) cooperates with an outer circumference of the side gear (5).

3. The electric drive assembly according to claim 1 or 2, **characterized in that**: an outer side of the side gear end cap (8) is connected with the half shaft through a spline.

4. A new energy vehicle comprising the electric drive assembly according to any one of claims 1-3.
